# EUROPÄISCHE PATENTSCHRIFT

(11) **EP 3 493 370 B1**
(45) Veröffentlichungstag und Bekanntmachung des Hinweises auf die Patenterteilung: **18.08.2021**
(21) Anmeldenummer: 18201217.9
(22) Anmeldetag: 18.10.2018
(51) Int. Cl.: H02K 1/18, H02K 7/116

(54) **ANTRIEBSEINRICHTUNG SOWIE ACHSANTRIEBSEINRICHTUNG FÜR EIN KRAFTFAHRZEUG**
DRIVE DEVICE AND AXLE DRIVE DEVICE FOR A MOTOR VEHICLE
DISPOSITIF D'ENTRAÎNEMENT AINSI QUE DISPOSITIF D'ENTRAÎNEMENT D'ESSIEU POUR UN VÉHICULE AUTOMOBILE

(30) Priorität: 29.11.2017 DE 102017221389
(43) Veröffentlichungstag der Anmeldung: 05.06.2019
(73) Patentinhaber: AUDI AG, 85045 Ingolstadt (DE)
(72) Erfinder: Albl, Sebastian, 85080 Gaimersheim (DE); Scharlach, Albert, 85129 Oberdolling (DE)

(56) Entgegenhaltungen:
- EP-A1- 1 747 969
- WO-A1-2011/118266
- FR-A1- 2 949 393
- JP-A- 2005 153 547

## Beschreibung

Die Erfindung betrifft eine Antriebseinrichtung für ein Kraftfahrzeug, mit einer Abtriebswelle und einer elektrischen Maschine, die einen Stator sowie einen um eine Drehachse bezüglich des Stators drehbar gelagerten Rotor aufweist, der über ein Winkelgetriebe mit der Abtriebswelle gekoppelt ist, wobei eine elektrische Wicklung des Stators und/oder eine elektrische Wicklung des Rotors in axialer Richtung bezüglich der Drehachse des Rotors über einen Spulenkörper des Stators und/oder einen Spulenkörper des Rotors zur Ausbildung eines Wickelkopfs des Stators und/oder eines Wickelkopfs des Rotors übersteht und das Winkelgetriebe in axialer Richtung des Rotors gesehen in Überdeckung mit dem Wickelkopf des Stators und/oder mit dem Wickelkopf des Rotors angeordnet ist, sodass der Wickelkopf des Stators und/oder der Wickelkopf des Rotors das Winkelgetriebe in Umfangsrichtung umgreift. Die Erfindung betrifft weiterhin eine Achsantriebseinrichtung für ein Kraftfahrzeug.

Aus dem Stand der Technik ist beispielsweise die Druckschrift US 1,613,053 bekannt. Diese betrifft eine Startereinrichtung, welche über eine elektrische Maschine verfügt, die über ein Winkelgetriebe mit einer weiteren Einrichtung in Wirkverbindung steht.

Aus der Druckschrift EP 1 747 969 A1 ist eine Antriebseinheit bekannt. Diese weist einen Lenkmotor und einen Fahrmotor auf, zwischen welchen ein Übersetzungsgetriebe angeordnet ist, wobei das Untersetzungsgetriebe, der Lenkmotor und der Fahrmotor koaxial zueinander angeordnet sind und der Fahrmotor eine hohle Antriebswelle aufweist, in welcher die Abtriebswelle des Lenkgetriebes angeordnet ist.

Weiterhin sind aus dem Stand der Technik die Druckschriften FR 2 949 393 A1, JP 2005 153547 A und WO 2011/118266 A1 bekannt.

Es ist Aufgabe der Erfindung, eine Antriebseinrichtung vorzuschlagen, welche gegenüber bekannten Antriebseinrichtungen Vorteile aufweist, insbesondere einen kompakten Aufbau und/oder hervorragende Akustikeigenschaften und/oder eine hervorragende Lagerung wenigstens eines Getriebeelements des Winkelgetriebes ermöglicht.

Dies wird erfindungsgemäß mit einer Antriebseinrichtung mit den Merkmalen des Anspruchs 1 erreicht. Dabei ist vorgesehen, dass das Winkelgetriebe wenigstens ein Kegelzahnrad aufweist, das koaxial zu der Drehachse des Rotors vorliegt und mit einer Antriebswelle gekoppelt ist, die mit dem Rotor in permanenter Wirkverbindung steht, und in axialer Richtung bezüglich der Drehachse des Rotors in Überdeckung mit dem Wickelkopf des Stators und/oder mit dem Wickelkopf des Rotors angeordnet ist.

Grundsätzlich ist vorgesehen, dass eine elektrische Wicklung des Stators und/oder eine elektrische Wicklung des Rotors in axialer Richtung bezüglich der Drehachse über einen Spulenkörper zur Ausbildung eines Wickelkopfs übersteht und das Winkelgetriebe zumindest bereichsweise in axialer Richtung gesehen in Überdeckung mit dem Wickelkopf angeordnet ist.

Die Antriebseinrichtung ist beispielsweise Bestandteil eines Kraftfahrzeugs. In diesem Fall dient sie dem Antreiben des Kraftfahrzeugs, also dem Bereitstellen eines auf das Antreiben des Kraftfahrzeugs gerichteten Drehmoments. Die Antriebseinrichtung verfügt über die Abtriebswelle, an welcher sie das Antriebsdrehmoment bereitstellt beziehungsweise bereitstellen kann. Zur Bereitstellung des Antriebsdrehmoments verfügt die Antriebseinrichtung über die elektrische Maschine.

Die elektrische Maschine ist bevorzugt sowohl motorisch als auch generatorisch betreibbar. In ersterem Fall wird der elektrischen Maschine elektrische Energie zur Bereitstellung des Antriebsdrehmoments zugeführt. Das Antriebsdrehmoment kann dabei beispielsweise auf ein Beschleunigen oder ein Verzögern des Kraftfahrzeugs gerichtet sein. Im generatorischen Betrieb wird hingegen ein an der Abtriebswelle anliegendes Drehmoment zur Bereitstellung von elektrischer Energie herangezogen. Das bedeutet, dass mechanische beziehungsweise kinetische Energie der Abtriebswelle in elektrische Energie umgewandelt wird.

Die elektrische Maschine verfügt über den Stator sowie über den Rotor. Der Rotor ist bezüglich des Stators um die Drehachse drehbar gelagert. Beispielsweise sind der Stator und der Rotor an einem gemeinsamen Maschinengehäuse der elektrischen Maschine angeordnet, wobei der Stator bevorzugt starr mit dem Maschinengehäuse verbunden ist, wohingegen der Rotor drehbar in und/oder an dem Maschinengehäuse gelagert ist.

Der Rotor ist mit der Abtriebswelle wirkverbunden, nämlich insbesondere permanent. Hierzu steht er über das Winkelgetriebe mit der Abtriebswelle in Wirkverbindung. Das Winkelgetriebe dient einer Richtungsumsetzung des von der elektrischen Maschine bereitgestellten Drehmoments. Entsprechend ist die Abtriebswelle bezüglich der Drehachse angewinkelt oder liegt sogar windschief zu dieser vor.

In ersterem Fall schneidet eine Drehachse der Abtriebswelle, um welche die Abtriebswelle drehbar gelagert ist, die Drehachse des Rotors. Im Falle der windschiefen Anordnung sind die Drehachsen der Abtriebswelle und des Rotors beabstandet voneinander, schneiden also einander nicht. Das Winkelgetriebe weist beispielsweise zwei Getriebeelemente auf, wobei ein erstes der Getriebeelemente mit dem Rotor und ein zweites der Getriebeelemente mit der Abtriebswelle gekoppelt ist, vorzugsweise jeweils permanent.

Der Stator oder der Rotor verfügt über den Spulenkörper sowie über die elektrische Wicklung, welche auf dem Spulenkörper angeordnet ist. In anderen Worten ist die Wicklung auf den Spulenkörper aufgewickelt, sodass die Wicklung den Spulenkörper vorzugsweise mit einer Vielzahl von Windungen mehrfach umgreift. Beispielsweise verfügt der Spulenkörper über eine Vielzahl von Polschuhen, welche jeweils von der elektrischen Wicklung oder Windungen der elektrischen Wicklung umgriffen sind. Selbstverständlich können auch mehrere elektrische Wicklungen vorliegen, wobei jede der Wicklungen jeweils wenigstens einem der Polschuhe zugeordnet ist und auf diese aufgewickelt ist. Selbstverständlich können sowohl der Stator als auch der Rotor jeweils einen Spulenkörper aufweisen, der auf die beschriebene Art ausgestaltet ist.

Die elektrische Wicklung des Stators oder des Rotors steht in axialer Richtung bezüglich der Drehachse über den Spulenkörper über. Dieser Überstand wird auch als Wickelkopf bezeichnet. Zur platzsparenden Ausgestaltung der Antriebseinrichtung liegt das Winkelgetriebe in axialer Richtung gesehen zumindest bereichsweise in Überdeckung mit dem Wickelkopf vor. Hierbei ist der Wickelkopf vorzugsweise in radialer Richtung weiter außen liegend als das Winkelgetriebe angeordnet. Weiterhin ist es vorgesehen, dass der Wickelkopf das Winkelgetriebe in Umfangsrichtung wenigstens bereichsweise umgreift. Beispielsweise liegt der Wickelkopf im Längsschnitt bezüglich der Drehachse gesehen auf gegenüberliegenden Seiten des Winkelgetriebes vor.

Bei einer derartigen Ausgestaltung der Antriebseinrichtung rückt das Winkelgetriebe deutlich näher an den Stator oder Rotor beziehungsweise dessen Spulenkörper heran als dies bei anderen Ausgestaltungen der Antriebseinrichtung der Fall ist. Entsprechend verringert sich im Vergleich mit diesen der Bauraumbedarf in axialer Richtung. Aufgrund der nahen Anordnung des Winkelgetriebes an dem Spulenkörper lässt sich zudem eine hervorragende Lagerung desjenigen Getriebeelements des Winkelgetriebes erzielen, welches mit dem Rotor gekoppelt ist, wobei diese Kopplung nicht über das Winkelgetriebe vorliegt.

Weisen sowohl der Rotor als auch der Stator jeweils einen Wickelkopf auf, so ist das Winkelgetriebe vorzugsweise zumindest bereichsweise in axialer Richtung gesehen in Überdeckung mit beiden Wickelköpfen angeordnet. Der Wickelkopf des Rotors kann in axialer Richtung eine kleinere Erstreckung in die von dem Rotor abgwandte Richtung aufweisen als der Wickelkopf des Stators. In anderen Worten steht der Wickelkopf des Stators in axialer Richtung über den Wickelkopf des Rotors über.
Die Erfindung sieht vor, dass das Winkelgetriebe wenigstens ein Kegelzahnrad aufweist, das koaxial zu der Drehachse vorliegt und in axialer Richtung in Überdeckung mit dem Wickelkopf angeordnet ist. Das Kegelzahnrad stellt das wenigstens eine Getriebeelement des Winkelgetriebes dar. Bevorzugt weist das Winkelgetriebe zusätzlich zu dem Kegelzahnrad ein weiteres Kegelzahnrad auf, welches mit dem Kegelzahnrad kämmt, nämlich insbesondere permanent kämmt.
Das Kegelzahnrad ist koaxial zu der Drehachse angeordnet, wohingegen das weitere Kegelzahnrad beispielsweise koaxial zu der Drehachse der Abtriebswelle angeordnet ist. Das Kegelzahnrad ist zur platzsparenden Ausgestaltung der Antriebseinrichtung derart angeordnet, dass es in axialer Richtung mit dem Wickelkopf überlappt. Wie vorstehend bereits erläutert, ist es hierbei erfindungsgemäß vorgesehen, dass der Wickelkopf das Kegelzahnrad in Umfangsrichtung umgreift.

Die Erfindung sieht weiterhin vor, dass das Kegelzahnrad drehfest mit einer Antriebswelle gekoppelt ist, die mit dem Rotor in permanenter Wirkverbindung steht. Über die Antriebswelle ist in anderen Worten das Kegelzahnrad mit dem Rotor gekoppelt. Das bedeutet, dass die Antriebswelle einerseits drehfest mit dem Kegelzahnrad gekoppelt ist und andererseits an den Rotor angeschlossen ist.
Die Antriebswelle ist vorzugsweise koaxial zu dem Rotor angeordnet, weist also eine Drehachse auf, welche mit der Drehachse des Rotors zusammenfällt. Die Antriebswelle kann beispielsweise unmittelbar mit dem Rotor gekoppelt sein, sodass also die Antriebswelle und der Rotor in drehzahlfester Verbindung miteinander stehen und entsprechend stets dieselbe Drehzahl aufweisen. Mithilfe der Antriebswelle kann eine hervorragende Lagerung des Kegelzahnrads erzielt werden.

Eine Weiterbildung der Erfindung sieht vor, dass die Antriebswelle mittels eines Lagers drehbar gelagert ist, wobei das Lager in axialer Richtung zwischen dem Kegelzahnrad und dem Spulenkörper angeordnet ist. Das Lager liegt beispielsweise als Gleitlager oder - bevorzugt - als Wälzlager vor. Das Lager dient der Lagerung der Antriebswelle und vorzugsweise zusätzlich der Lagerung des Kegelzahnrads des Winkelgetriebes. Hierzu ist das Lager in axialer Richtung zwischen dem Kegelzahnrad und dem Spulenkörper angeordnet.

Besonders bevorzugt ist es also vorgesehen, dass das Lager in axialer Richtung gesehen zumindest teilweise, besonders bevorzugt jedoch vollständig, in Überdeckung mit dem Wickelkopf angeordnet ist. In anderen Worten wird das Lager in Umfangsrichtung zumindest bereichsweise, vorzugsweise jedoch vollständig, von dem Wickelkopf umgriffen. Hieraus folgt, dass für die Anordnung des Lagers kein zusätzlicher Bauraum in axialer Richtung benötigt wird, sodass entsprechend die Antriebseinrichtung besonders kompakt ausgestaltet ist.

Eine weitere bevorzugte Ausführungsform der Erfindung sieht vor, dass das Winkelgetriebe zusätzlich ein mit dem Kegelzahnrad kämmendes weiteres Kegelzahnrad aufweist, das gegenüber der Drehachse angewinkelt oder windschief drehbar gelagert ist und drehfest mit der Abtriebswelle gekoppelt ist. Das Winkelgetriebe weist zusammenfassend also das Kegelzahnrad und das weitere Kegelzahnrad auf. Das Kegelzahnrad ist rotorseitig und das weitere Kegelzahnrad abtriebswellenseitig angeordnet. Das Kegelzahnrad und das weitere Kegelzahnrad sind jeweils um eine Drehachse drehbar gelagert, wobei die beiden Drehachsen gegeneinander angewinkelt sind oder windschief zueinander stehen. Die Drehachse des Kegelzahnrads fällt vorzugsweise mit der Drehachse des Rotors zusammen, wohingegen die Drehachse des weiteren Kegelzahnrads besonders bevorzugt mit der Drehachse der Abtriebswelle zusammenfällt.

Das weitere Kegelzahnrad ist drehfest mit der Abtriebswelle gekoppelt, beispielsweise sitzt es unmittelbar auf der Abtriebswelle auf. Es kann jedoch auch vorgesehen sein, dass das weitere Kegelzahnrad über ein Differentialgetriebe, beispielsweise ein Achsdifferentialgetriebe, mit der Abtriebswelle wirkverbunden ist. Beispielsweise ist das weitere Kegelzahnrad hierbei mit einem Differentialgetriebekäfig des Differentialgetriebes verbunden, insbesondere starr und/oder permanent. Beispielsweise wird das weitere Kegelzahnrad von dem Differentialgetriebekäfig ausgebildet. Die Integration des Winkelgetriebes, welches das Kegelzahnrad und das weitere Kegelzahnrad aufweist, in die Antriebseinrichtung derart, dass die axiale Überdeckung mit dem Wickelkopf vorliegt, ermöglicht eine besonders kompakte Ausführungsform der Antriebseinrichtung.

Eine weitere Ausgestaltung der Erfindung sieht vor, dass das weitere Kegelzahnrad in axialer Richtung gesehen ebenfalls teilweise in Überdeckung mit dem Wickelkopf steht. Besonders bevorzugt greift also auch das weitere Kegelzahnrad in den Kegelkopf ein beziehungsweise tritt derart auf den Spulenkörper zu, dass es von dem Wickelkopf in Umfangsrichtung zumindest teilweise umgriffen ist. Besonders bevorzugt gilt dies für einen äußeren Rand des weiteren Kegelzahnrads.

Mit einer derartigen Ausgestaltung kann ein großer Teil des Kegelzahnrads in Überdeckung mit dem Wickelkopf vorliegen. Beispielsweise stehen mindestens 30 %, mindestens 40 %, mindestens 50 %, mindestens 60 %, mindestens 70 % oder mindestens 75 % des Kegelzahnrads in axialer Richtung gesehen in Überdeckung mit dem Wickelkopf. Aufgrund der Überdeckung des weiteren Kegelzahnrads mit dem Wickelkopf wird insoweit die Baulänge der Antriebseinrichtung in axialer Richtung weiter verringert.

Eine weitere Ausführungsform der Erfindung sieht vor, dass die Antriebswelle über ein Umlaufrädergetriebe mit dem Rotor gekoppelt ist, das in axialer Richtung auf der dem Winkelgetriebe gegenüberliegenden Seite des Rotors angeordnet ist. Die Antriebswelle ist also nicht unmittelbar mit dem Rotor gekoppelt. Vielmehr liegt diese Kopplung lediglich mittelbar über das Umlaufrädergetriebe vor. Das Umlaufrädergetriebe verfügt über mehrere Getriebeelemente, wobei die Antriebswelle mit einem ersten Getriebeelement und der Rotor mit einem zweiten Getriebeelement gekoppelt ist. Das Umlaufrädergetriebe kann auch als Planetenradgetriebe oder Planetengetriebe bezeichnet werden.

Das Umlaufrädergetriebe ist auf der dem Winkelgetriebe gegenüberliegenden Seite des Rotors angeordnet. Entsprechend durchgreift die Antriebswelle den Spulenkörper des Stators oder Rotors in axialer Richtung, vorzugsweise vollständig, um einerseits an das Umlaufrädergetriebe und andererseits an das Kegelzahnrad angeschlossen beziehungsweise mit diesem gekoppelt zu sein. Hierdurch ergibt sich eine hervorragende Abstützung der Antriebswelle aufgrund des großen Lagerabstands zwischen dem vorstehend bereits beschriebenen Lager und dem Umlaufrädergetriebe oder einem weiteren Lager, welches der Lagerung der Antriebswelle auf der dem Lager abgewandten Seite des Spulenkörpers dient.

Das Umlaufrädergetriebe dient einer Drehzahlreduzierung, sodass die Antriebswelle eine geringere Drehzahl aufweist als der Rotor. Hieraus resultiert eine geringe Drehzahl des Winkelgetriebes, sodass im Vergleich mit anderen Antriebseinrichtungen, bei welcher das Winkelgetriebe dieselbe Drehzahl aufweist wie der Rotor, eine geringere Geräuschentwicklung auftritt. Die Antriebseinrichtung gemäß den Ausführungen im Rahmen dieser Beschreibung weist also in akustischer Hinsicht deutliche Vorteile auf.

Eine weitere Ausführungsform der Erfindung sieht vor, dass der Rotor oder der Stator auf seiner dem Wickelkopf abgewandten Seite einen weiteren Wickelkopf ausweist, der über den Spulenkörper übersteht, wobei das Umlaufrädergetriebe in axialer Richtung zumindest teilweise in Überdeckung mit dem weiteren Wickelkopf angeordnet ist. Die elektrische Wicklung des Rotors beziehungsweise des Stators steht also in axialer Richtung bezüglich der Drehachse auch auf der dem Wickelkopf abgewandten Seite über den Spulenkörper über und bildet dort den weiteren Wickelkopf aus.

Zur weiteren Reduzierung der Abmessungen der Antriebseinrichtung in axialer Richtung ist nun das Umlaufrädergetriebe in axialer Richtung in Überdeckung mit dem weiteren Wickelkopf angeordnet. Das bedeutet analog zu den Ausführungen zu dem Wickelkopf und dem Winkelgetriebe, dass der weitere Wickelkopf das Umlaufrädergetriebe in Umfangsrichtung zumindest bereichsweise, besonders bevorzugt jedoch vollständig, umgreift. Beispielsweise liegt das Umlaufrädergetriebe hinsichtlich seiner Abmessungen in axialer Richtung zu mindestens 30 %, mindestens 40 %, mindestens 50 %, mindestens 60 %, mindestens 70 % oder mindestens 75 % in Überdeckung mit dem weiteren Wickelkopf vor.

Schließlich kann im Rahmen einer weiteren bevorzugten Ausgestaltung der Erfindung vorgesehen sein, dass die Antriebswelle mit einem ersten Getriebeelement des Umlaufrädergetriebes und der Rotor mit einem zweiten Getriebeelement des Umlaufrädergetriebes drehfest gekoppelt ist. Hierauf wurde vorstehend bereits hingewiesen. Das Umlaufrädergetriebe weist üblicherweise drei Getriebeelemente auf, nämlich ein Sonnenrad, ein Hohlrad sowie einen Umlaufradträger, an welchem wenigstens ein Umlaufrad drehbar gelagert ist. Das Umlaufrad kämmt einerseits mit dem Hohlrad und andererseits mit dem Sonnenrad.

Als erstes Getriebeelement liegt beispielsweise das Sonnenrad vor, wohingegen als zweites Getriebeelement das Hohlrad oder der Umlaufradträger dient. Das jeweilige dritte Getriebeelement ist vorzugsweise festgesetzt, insbesondere bezüglich des Maschinengehäuses, sodass zwischen dem ersten Getriebeelement und dem zweiten Getriebeelement eine definierte Übersetzung vorliegt, welche auch als Standübersetzung bezeichnet werden kann. Vorzugsweise wird als zweites Getriebeelement das Hohlrad verwendet, sodass der Umlaufradträger entsprechend festgesetzt ist. Der Umlaufradträger kann auch als Steg bezeichnet werden.

Die Integration des Umlaufrädergetriebes in die Antriebseinrichtung hinsichtlich des übertragenen Drehmoments zwischen dem Rotor und dem Winkelgetriebe hat den bereits erwähnten Vorteil, dass die Drehzahl des Winkelgetriebes vergleichsweise gering ist. Aufgrund der Anordnung des Umlaufrädergetriebes derart, dass dieses in Überdeckung mit dem weiteren Wickelkopf vorliegt, wird dieser Vorteil mit einer äußerst kompakten Antriebseinrichtung realisiert.

Die Erfindung betrifft weiterhin eine Achsantriebseinrichtung für ein Kraftfahrzeug, mit mehreren Antriebseinrichtungen, insbesondere Antriebseinrichtungen gemäß den Ausführungen im Rahmen dieser Beschreibung, wobei jede der Antriebseinrichtungen über eine Abtriebswelle und eine elektrische Maschine verfügt, die einen Stator sowie einen um eine Drehachse bezüglich des Stators drehbar gelagerten Rotor aufweist, der über ein Winkelgetriebe mit der Abtriebswelle gekoppelt ist. Dabei ist vorgesehen, dass bei jeder der Antriebseinrichtungen eine elektrische Wicklung des Stators und/oder eine elektrische Wicklung des Rotors in axialer Richtung bezüglich der Drehachse des Rotors über eine Spulenkörper des Stators und/oder einen Spulenkörper des Rotors zur Ausbildung eines Wickelkopfs des Stators und/oder des Rotors übersteht und das Winkelgetriebe in axialer Richtung des Rotors gesehen in Überdeckung mit dem Wickelkopf des Stators und/oder mit dem Wickelkopf des Rotors angeordnet ist, sodass der Wickelkopf des Stators und/oder der Wickelkopf des Rotors das Winkelgetriebe in Umfangsrichtung umgreift. Weiterhin ist vorgesehen, dass das Winkelgetriebe wenigstens ein Kegelzahnrad aufweist, das koaxial zu der Drehachse des Rotors vorliegt und mit einer Antriebswelle gekoppelt ist, die mit dem Rotor in permanenter Wirkverbindung steht, und in axialer Richtung bezüglich der Drehachse des Rotors in Überdeckung mit dem Wickelkopf des Stators und/oder mit dem Wickelkopf des Rotors angeordnet ist.

Auf die Vorteile einer derartigen Ausgestaltung der Antriebseinrichtungen beziehungsweise der Achsantriebseinrichtung wurde bereits hingewiesen. Sowohl die Achsantriebseinrichtung als auch ihre Antriebseinrichtungen können gemäß den Ausführungen im Rahmen dieser Beschreibung weitergebildet sein, sodass insoweit auf diese verwiesen wird.

Die Achsantriebseinrichtung dient dem Antreiben von Rädern einer Radachse des Kraftfahrzeugs. Bevorzugt ist jedem Rad der Radachse eine der Antriebseinrichtungen zugeordnet, sodass mithilfe der Achsantriebseinrichtung ein Einzelradantrieb der Räder realisiert ist. Beispielsweise ist jedes Rad mit der Abtriebswelle der jeweiligen Antriebseinrichtung gekoppelt, insbesondere starr und/oder permanent. Mithilfe der Achsantriebseinrichtung beziehungsweise der Antriebseinrichtungen kann also ein solcher Einzelradantrieb besonders platzsparend und akustisch vorteilhaft umgesetzt werden.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung einer Achsantriebseinrichtung in einer ersten Ausführungsform, sowie
- Figur 2: eine schematische Darstellung der Achsantriebseinrichtung in einer zweiten Ausführungsform.

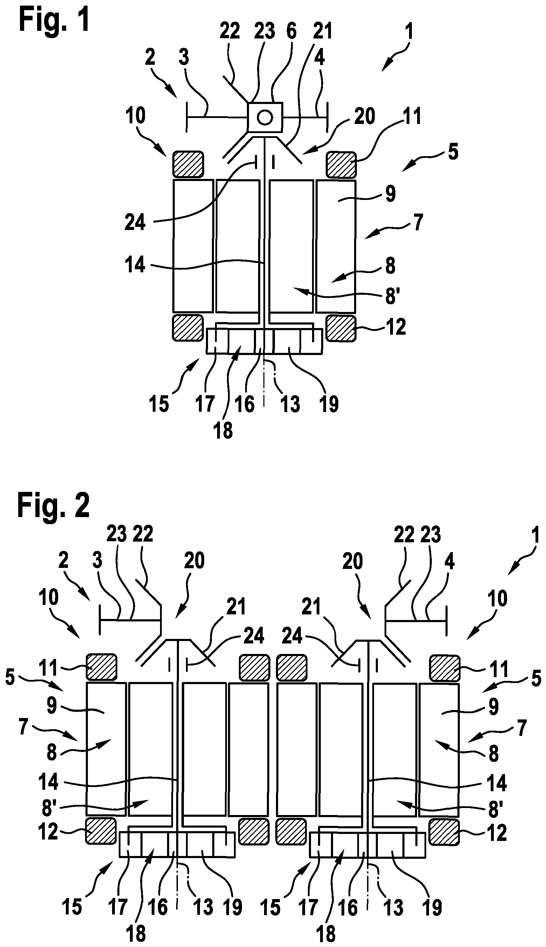

Die Figur 1 zeigt eine schematische Darstellung einer Achsantriebseinrichtung 1 für ein Kraftfahrzeug, welche dem Antrieb einer Radachse 2 dient. Die Radachse 2 weist zwei Teilachsen 3 und 4 auf, wobei jede der Teilachsen 3 und 4 jeweils mit einem Rad der Radachse 2 gekoppelt ist, vorzugsweise starr und/oder permanent. Die Achsantriebseinrichtung 1 weist eine Antriebseinrichtung 5 auf, die dem Antreiben der Radachse 2 dient. Hierzu ist die Antriebseinrichtung 5 über ein Differentialgetriebe 6 mit der Radachse 2 gekoppelt. Das Differentialgetriebe 6 kann insoweit auch als Achsdifferentialgetriebe bezeichnet werden. Das Differentialgetriebe 6 koppelt die Antriebseinrichtung 5 sowohl mit der Teilachse als auch der Teilachse 4. Die Teilachsen 3 und 4 stellen insoweit Ausgangswellen des Differentialgetriebes 6 dar.

Die Antriebseinrichtung 5 verfügt über eine elektrische Maschine 7, die einen Stator 8 sowie einen Rotor 8' aufweist. Der Stator 8 verfügt über einen Spulenkörper 9, auf welchen eine elektrische Wicklung 10 oder mehrere elektrische Wicklungen 10 aufgewickelt sind. Die elektrische Wicklung 10 bildet einerseits des Spulenkörpers 9 einen Wickelkopf 11 und andererseits des Spulenkörpers 9 einen weiteren Wickelkopf 12 aus. In anderen Worten steht die elektrische Wicklung 10 in axialer Richtung bezüglich einer Drehachse 13 des Rotors 8' beidseitig über den Spulenkörper 9 zur Ausbildung der Wickelköpfe 11 und 12 über.

Der Rotor 8' ist mit einer Antriebswelle 14 gekoppelt, nämlich in dem hier dargestellten Ausführungsbeispiel über ein Umlaufrädergetriebe 15. Das Umlaufrädergetriebe 15 verfügt über ein erstes Getriebeelement 16, ein zweites Getriebeelement 17 sowie ein drittes Getriebeelement 18. In dem hier dargestellten Ausführungsbeispiel liegt das erste Getriebeelement 16 als Sonnenrad, das zweite Getriebeelement 17 als Hohlrad und das dritte Getriebeelement 18 als Umlaufradträger vor. An den Umlaufradträger ist wenigstens ein Umlaufrad 19 drehbar gelagert, welches einerseits mit dem Sonnenrad und andererseits mit dem Hohlrad kämmt.

In dem hier dargestellten Ausführungsbeispiel ist der Umlaufradträger beziehungsweise das dritte Getriebeelement 18 festgesetzt. Das erste Getriebeelement 16 ist unmittelbar mit der Antriebswelle 14 gekoppelt, nämlich starr und/oder permanent. Das dritte Getriebeelement 18 ist hingegen unmittelbar mit dem Rotor 8' gekoppelt, vorzugsweise ebenfalls starr und/oder permanent.

Auf ihrer dem Umlaufrädergetriebe 15 abgewandten Seite ist die Antriebswelle 14 an ein Winkelgetriebe 20 angeschlossen, welches ein Kegelzahnrad 21 und ein weiteres Kegelzahnrad 22 aufweist. Die Kegelzahnräder 21 und 22 kämmen miteinander. Das Kegelzahnrad 22 ist auf einer Abtriebswelle 23 der Antriebseinrichtung 5 angeordnet und drehfest mit dieser verbunden. In dem hier dargestellten Ausführungsbeispiel wird die Abtriebswelle 23 von einem Differentialgetriebekorb des Differentialgetriebes 6 dargestellt. Auf der dem Winkelgetriebe 20 zugewandten Seite des Stators 8 beziehungsweise des Rotors 8' beziehungsweise des Spulenkörpers 9 ist die Antriebswelle 14 mittels eines Lagers 24 drehbar gelagert.

Um eine besonders kompakte Ausgestaltung der Antriebseinrichtung 5 zu realisieren, ist es vorgesehen, das Winkelgetriebe 20 zumindest bereichsweise in axialer Richtung gesehen in Überdeckung mit dem Wickelkopf 11 anzuordnen. Bevorzugt ist es zusätzlich vorgesehen, das Umlaufrädergetriebe 15 in axialer Richtung zumindest bereichsweise in axialer Überdeckung mit dem weiteren Wickelkopf 12 anzuordnen.

Hierdurch wird eine in axialer Richtung besonders kompakte Ausgestaltung der Antriebseinrichtung 5 und mithin der Achsantriebseinrichtung 1 realisiert. Das Lager 24, welches in axialer Richtung zwischen dem Kegelzahnrad 21 und dem Spulenkörper 9 angeordnet ist, liegt insoweit ebenfalls in Überdeckung mit dem Wickelkopf 11 vor, vorzugsweise vollständig.

Die Figur 2 zeigt eine schematische Darstellung der Achsantriebseinrichtung 1 in einer zweiten Ausführungsform. In dieser verfügt die Achsantriebseinrichtung 1 über mehrere Achsantriebseinrichtungen 5, nämlich in der hier dargestellten Ausführungsform zwei Achsantriebseinrichtungen 5. Grundsätzlich ist die Achsantriebseinrichtung 1 der zweiten Ausführungsform ähnlich zu der Achsantriebseinrichtung 1 der ersten Ausführungsform ausgestaltet, sodass nachfolgend lediglich auf die Unterschiede eingegangen wird.

Diese liegen im Wesentlichen darin, dass die Achsantriebseinrichtung 1 über zwei Achsantriebseinrichtungen 5 verfügt. Jede der Antriebseinrichtungen 5 ist einer der Teilachsen 3 und 4 zugeordnet, sodass das Differentialgetriebe 6 entfällt. Die Teilachsen 3 und 4 stellen nun jeweils die Abtriebswelle 23 der entsprechenden Antriebseinrichtung 5 dar. Entsprechend bildet die Achsantriebseinrichtung 1 in ihrer zweiten Ausführungsform einen Einzelradantrieb für das Kraftfahrzeug ab. Hinsichtlich der weiteren Ausgestaltung der Achsantriebseinrichtung 1 in ihrer zweiten Ausführungsform wird auf die Ausführungen im Rahmen dieser Beschreibung, insbesondere auch zu der ersten Ausführungsform, verwiesen. Diese sind im Wesentlichen analog heranziehbar.

## Patentansprüche

1. Antriebseinrichtung (5) für ein Kraftfahrzeug, mit einer Abtriebswelle (23) und einer elektrischen Maschine (7), die einen Stator (8) sowie einen um eine Drehachse (13) bezüglich des Stators (8) drehbar gelagerten Rotor (8') aufweist, der über ein Winkelgetriebe (20) zur Richtungsumsetzung des von der elektrischen Maschine (7) bereitgestellten Drehmoments mit der Abtriebswelle (23) gekoppelt ist, wobei eine elektrische Wicklung (10) des Stators (8) und/oder eine elektrische Wicklung des Rotors (8') in axialer Richtung bezüglich der Drehachse (13) des Rotors (8') über einen Spulenkörper (9) des Stators (8) und/oder einen Spulenkörper des Rotors (8') zur Ausbildung eines Wickelkopfs (11) des Stators (8) und/oder eines Wickelkopfs des Rotors (8') übersteht und das Winkelgetriebe (20) in axialer Richtung des Rotors (8') gesehen in Überdeckung mit dem Wickelkopf (11) des Stators (8) und/oder mit dem Wickelkopf des Rotors (8') angeordnet ist, sodass der Wickelkopf (11) des Stators (8) und/oder der Wickelkopf des Rotors (8') das Winkelgetriebe (20) in Umfangsrichtung des Stators (8) und/oder des Rotors (8') umgreift, **dadurch gekennzeichnet, dass** das Winkelgetriebe (20) wenigstens ein Kegelzahnrad (21) aufweist, das koaxial zu der Drehachse (13) des Rotors (8') vorliegt und drehfest mit einer Antriebswelle (14) gekoppelt ist, die mit dem Rotor (8') in permanenter Wirkverbindung steht, und in axialer Richtung bezüglich der Drehachse (13) des Rotors (8') in Überdeckung mit dem Wickelkopf (11) des Stators (8) und/oder mit dem Wickelkopf des Rotors (8') angeordnet ist, sodass der Wickelkopf (11) des Stators (8) und/oder der Wickelkopf des Rotors (8') das Kegelzahnrad (21) in Umfangsrichtung des Stators (8) und/oder des Rotors (8') umgreift.

2. Antriebseinrichtung nach Anspruch 1, **dadurch gekennzeichnet, dass** die Antriebswelle (14) mittels eines Lagers (24) drehbar gelagert ist, wobei das Lager (24) in axialer Richtung zwischen dem Kegelzahnrad (21) und dem Spulenkörper (9) angeordnet ist.

3. Antriebseinrichtung nach einem der vorhergehenden Ansprüche, **dadurch gekennzeichnet, dass** das Winkelgetriebe (20) zusätzlich ein mit dem Kegelzahnrad (21) kämmendes weiteres Kegelzahnrad (22) aufweist, das gegenüber der Drehachse (13) angewinkelt oder windschief drehbar gelagert ist und drehfest mit der Abtriebswelle (23) gekoppelt ist.

4. Antriebseinrichtung nach Anspruch 3, **dadurch gekennzeichnet, dass** das weitere Kegelzahnrad (22) in axialer Richtung gesehen ebenfalls teilweise in Überdeckung mit dem Wickelkopf (11) steht.

5. Antriebseinrichtung nach einem der vorhergehenden Ansprüche, **dadurch gekennzeichnet, dass** die Antriebswelle (14) über ein Umlaufrädergetriebe (15) mit dem Rotor (8') gekoppelt ist, das in axialer Richtung auf der dem Winkelgetriebe (20) gegenüberliegenden Seite des Rotors (8') angeordnet ist.

6. Antriebseinrichtung nach Anspruch 5, **dadurch gekennzeichnet, dass** der Rotor (8') oder der Stator (8) auf seiner dem Wickelkopf (11) abgewandten Seite einen weiteren Wickelkopf (12) aufweist, der über den Spulenkörper (9) übersteht, wobei das Umlaufrädergetriebe (15) in axialer Richtung zumindest teilweise in Überdeckung mit dem weiteren Wickelkopf (12) angeordnet ist.

7. Antriebseinrichtung nach einem der Ansprüche 5 und 6, **dadurch gekennzeichnet, dass** die Antriebswelle (14) mit einem ersten Getriebeelement (16) des Umlaufrädergetriebes (15) und der Rotor (8') mit einem zweiten Getriebeelement (17) des Umlaufrädergetriebes (15) drehfest gekoppelt ist.

8. Achsantriebseinrichtung (1) für ein Kraftfahrzeug, mit mehreren Antriebseinrichtungen (5) nach einem der vorhergehenden Ansprüche, wobei jede der Antriebseinrichtungen (5) über eine Abtriebswelle (23) und eine elektrische Maschine (5) verfügt, die einen Stator (8) sowie einen um eine Drehachse (13) bezüglich des Stators (8) drehbar gelagerten Rotor (8') aufweist, der über ein Winkelgetriebe (20) zur Richtungsumsetzung des von der elektrischen Maschine (7) bereitgestellten Drehmoments mit der Abtriebswelle (23) gekoppelt ist, wobei bei jeder der Antriebseinrichtungen (5) eine elektrische Wicklung (10) des Stators (8) und/oder eine elektrisehe Wicklung des Rotors (8') in axialer Richtung bezüglich der Drehachse (13) des Rotors (8') über einen Spulenkörper (9) des Stators (8) und/oder einen Spulenkörper des Rotors (8') zur Ausbildung eines Wickelkopfs (11) des Stators (8) und/oder eines Wickelkopfs des Rotors (8') übersteht und das Winkelgetriebe (20) in axialer Richtung des Rotors (8') gesehen in Überdeckung mit dem Wickelkopf (11) des Stators (8) und/oder mit dem Wickelkopf des Rotors (8') angeordnet ist, sodass der Wickelkopf (11) des Stators (8) und/oder der Wickelkopf des Rotors (8') das Winkelgetriebe (20) in Umfangsrichtung des Stators (8) und/oder des Rotors (8') umgreift, **dadurch gekennzeichnet, dass** das Winkelgetriebe (20) wenigstens ein Kegelzahnrad (21) aufweist, das koaxial zu der Drehachse (13) des Rotors (8') vorliegt und drehfest mit einer Antriebswelle (14) gekoppelt ist, die mit dem Rotor (8') in permanenter Wirkverbindung steht, und in axialer Richtung bezüglich der Drehachse des Rotors (8') in Überdeckung mit dem Wickelkopf (11) des Stators (8) und/oder mit dem Wickelkopf des Rotors (8') angeordnet ist, sodass der Wickelkopf (11) des Stators (8) und/oder der Wickelkopf des Rotors (8') das Kegelzahnrad (21) in Umfangsrichtung des Stators (8) und/oder des Rotors (8') umgreift.

## Claims

1. Drive apparatus (5) for a motor vehicle, comprising a driven shaft (23) and an electric machine (7), which has a stator (8) as well as a rotor (8') mounted rotatably about an axis of rotation (13) with respect to the stator (8), the rotor being coupled to the driven shaft (23) by way of an angular gearing (20) for the directional conversion of the torque provided by the electric machine (7), wherein an electric winding (10) of the stator (8) and/or an electric winding of the rotor (8') projects in axial direction with respect to the axis of rotation (13) of the rotor (8') beyond a coil former (9) of the stator (8) and/or a coil former of the rotor (8') to form a winding head (11) of the stator (8) and/or a winding head of the rotor (8') and the angular gearing (20) is arranged overlapping with the winding head (11) of the stator (8) and/or with the winding head of the rotor (8') as viewed in axial direction of the rotor (8'), so that the winding head (11) of the stator (8) and/or the winding head of the rotor (8') engages around the angular gear (20) in circumferential direction of the stator (8) and/or the rotor (8'), **characterised in that** the angular gearing (20) has at least one bevel gear (21), which is coaxial to the axis of rotation (13) of the rotor (8') and is coupled in a rotationally secure manner to a drive shaft (14), which is in permanent operative connection with the rotor (8') and is arranged in axial direction with respect to the axis of rotation (13) of the rotor (8') overlapping with the winding head (11) of the stator (8) and/or with the winding head of the rotor (8'), so that the winding head (11) of the stator (8) and/or the winding head of the rotor (8') engages around the bevel gear (21) in circumferential direction of the stator (8) and/or the rotor (8').

2. Drive apparatus according to claim 1, **characterised in that** the drive shaft (14) is mounted rotatably by means of a bearing (24), wherein the bearing (24) is arranged in axial direction between the bevel gear (21) and the coil former (9).

3. Drive apparatus according to any of the preceding claims, **characterised in that** the angular gearing (20) additionally has a further bevel gear (22) meshing with the bevel gear (21), which further bevel gear is mounted rotatably and angled or askew with respect to the axis of rotation (13) and is coupled in a rotationally secure manner to the driven shaft (23).

4. Drive apparatus according to claim 3, **characterised in that** the further bevel gear (22) likewise overlaps partly with the winding head (11) when viewed in axial direction.

5. Drive apparatus according to any of the preceding claims, **characterised in that** the drive shaft (14) is coupled by a planetary gearing (15) to the rotor (8'), the planetary gearing being arranged on the side of the rotor (8') opposite the angular gearing (20) in axial direction.

6. Drive apparatus according to claim 5, **characterised in that** the rotor (8') or the stator (8) has a further winding head (12) on its side facing away from the winding head (11), which further winding head projects beyond the coil former (9), wherein the planetary gearing (15) is arranged at least partly overlapping with the additional winding head (12) in axial direction.

7. Drive apparatus according to any of claims 5 and 6, **characterised in that** the drive shaft (14) is coupled in a rotationally secure manner to a first gearing element (16) of the planetary gearing (15) and the rotor (8') is coupled in a rotationally secure manner to a second gearing element (17) of the planetary gearing (15).

8. Axle drive apparatus (1) for a motor vehicle, comprising a plurality of drive apparatuses (5) according to any of the preceding claims, wherein each of the drive apparatuses (5) has a driven shaft (23) and an electric machine (5), which has a stator (8) as well as a rotor (8') mounted rotatably about an axis of rotation (13) with respect to the stator (8), which rotor is coupled by an angular gearing (20) to the driven shaft (23) for the directional conversion of the torque provided by the electric machine (7), wherein in each of the drive apparatuses (5) an electrical winding (10) of the stator (8) and/or an electrical winding of the rotor (8') projects in axial direction with respect to the axis of rotation (13) of the rotor (8') beyond a coil former (9) of the stator (8) and/or a coil former of the rotor (8') to form a winding head (11) of the stator (8) and/or a winding head of the rotor (8'), and the angular gearing (20) is arranged, as viewed in axial direction of the rotor (8'), overlapping with the winding head (11) of the stator (8) and/or with the winding head of the rotor (8'), so that the winding head (11) of the stator (8) and/or the winding head of the rotor (8') engages around the angular gear (20) in circumferential direction of the stator (8) and/or the rotor (8'), **characterised in that** the angular gearing (20) has at least one bevel gear (21), which is coaxial to the axis of rotation (13) of the rotor (8') and is coupled in a rotationally secure manner to a drive shaft (14), which is in permanent operative connection with the rotor (8') and is arranged in axial direction with respect to the axis of rotation of the rotor (8') overlapping with the winding head (11) of the stator (8) and/or with the winding head of the rotor (8'), so that the winding head (11) of the stator (8) and/or the winding head of the rotor (8') engages around the bevel gear (21) in circumferential direction of the stator (8) and/or the rotor (8').

## Revendications

1. Dispositif de propulsion (5) pour un véhicule automobile, avec un arbre de sortie (23) et une machine électrique (7), qui présente un stator (8) ainsi qu'un rotor (8') monté de manière rotative par rapport au stator (8) autour d'un axe de rotation (13), qui est couplé à l'arbre de sortie (23) par l'intermédiaire d'un engrenage d'angle (20) pour convertir le sens du couple fourni par la machine électrique (7), dans lequel un enroulement électrique (10) du stator (8) et/ou un enroulement électrique du rotor (8') dépasse dans la direction axiale par rapport à l'axe de rotation (13) du rotor (8') par l'intermédiaire d'un corps de bobine (9) du stator (8) et/ou un corps de bobine du rotor (8') pour former une tête d'enroulement (11) du stator (8) et/ou une tête d'enroulement du rotor (8') et l'engrenage d'angle (20), vu dans la direction axiale du rotor (8'), est disposé en chevauchement avec la tête d'enroulement (11) du stator (8) et/ou avec la tête d'enroulement du rotor (8') de sorte que la tête d'enroulement (11) du stator (8) et/ou la tête d'enroulement du rotor (8') entoure l'engrenage d'angle (20) dans la direction circonférentielle du stator (8) et/ou du rotor (8'), **caractérisé en ce que** l'engrenage d'angle (20) présente au moins une roue dentée conique (21), qui est coaxiale à l'axe de rotation (13) du rotor (8') et est couplée de manière non rotative à un arbre d'entraînement (14), qui est en liaison active permanente avec le rotor (8') et qui est disposé dans la direction axiale par rapport à l'axe de rotation (13) du rotor (8') en chevauchement avec la tête d'enroulement (11) du stator (8) et/ou avec la tête d'enroulement du rotor (8'), de sorte que la tête d'enroulement (11) du stator (8) et/ou la tête d'enroulement du rotor (8') entourent la roue dentée conique (21) dans la direction circonférentielle du stator (8) et/ou du rotor (8').

2. Dispositif de propulsion selon la revendication 1, **caractérisé en ce que** l'arbre d'entraînement (14) est monté de manière rotative au moyen d'un palier (24), dans lequel le palier (24) est disposé dans la direction axiale entre la roue dentée conique (21) et le corps de bobine (9).

3. Dispositif de propulsion selon l'une quelconque des revendications précédentes, **caractérisé en ce que** l'engrenage d'angle (20) présente en outre une roue dentée conique supplémentaire (22) s'engrenant avec la roue dentée conique (21), qui est monté de manière rotative repliée ou oblique par rapport à l'axe de rotation (13) et qui est couplé de manière non rotative à l'arbre de sortie (23).

4. Dispositif de propulsion selon la revendication 3, **caractérisé en ce que** la roue dentée conique supplémentaire (22), vue dans la direction axiale, est également partiellement en chevauchement avec la tête d'enroulement (11).

5. Dispositif de propulsion selon l'une quelconque des revendications précédentes, **caractérisé en ce que** l'arbre d'entraînement (14) est couplé au rotor (8') par l'intermédiaire d'un engrenage épicycloïdal (15), qui est disposé dans la direction axiale sur le côté du rotor (8') opposé à l'engrenage d'angle (20).

6. Dispositif de propulsion selon la revendication 5, **caractérisé en ce que** le rotor (8') ou le stator (8) présente, sur son côté opposé à la tête d'enroulement (11), une tête d'enroulement supplémentaire (12) qui dépasse du corps de bobine (9), dans lequel l'engrenage épicycloïdal (15) est disposé en recouvrement au moins partiellement de l'autre tête d'enroulement (12) dans la direction axiale.

7. Dispositif de propulsion selon l'une quelconque des revendications 5 et 6, **caractérisé en ce que** l'arbre d'entraînement (14) est couplé de manière non rotative à un premier élément d'engrenage (16) de l'engrenage épicycloïdal (15) et le rotor (8') à un deuxième élément d'engrenage (17) de l'engrenage épicycloïdal (15).

8. Dispositif de propulsion d'axe (1) pour un véhicule automobile, avec plusieurs dispositifs d'entraînement (5) selon l'une quelconque des revendications précédentes, dans lequel chacun des dispositifs d'entraînement (5) dispose d'un arbre de sortie (23) et d'une machine électrique (5), qui présente un stator (8) ainsi qu'un rotor (8') monté de manière rotative par rapport au stator (8) autour d'un axe de rotation (13), qui est couplé à l'arbre de sortie (23) par l'intermédiaire d'un engrenage d'angle (20) pour convertir le sens du couple fourni par la machine électrique (7), dans lequel, sur chacun des dispositifs d'entraînement (5), un enroulement électrique (10) du stator (8) et/ou un enroulement électrique du rotor (8') dépasse dans la direction axiale par rapport à l'axe de rotation (13) du rotor (8') par l'intermédiaire d'un corps de bobine (9) du stator (8) et/ou un corps de bobine du rotor (8') pour former une tête d'enroulement (11) du stator (8) et/ou une tête d'enroulement du rotor (8') et l'engrenage d'angle (20), vu dans la direction axiale du rotor (8'), est disposé en chevauchement avec la tête d'enroulement (11) du stator (8) et/ou avec la tête d'enroulement du rotor (8') de sorte que la tête d'enroulement (11) du stator (8) et/ou la tête d'enroulement du rotor (8') entoure l'engrenage d'angle (20) dans la direction circonférentielle du stator (8) et/ou du rotor (8'), **caractérisé en ce que** l'engrenage d'angle (20) présente au moins une roue dentée conique (21), qui est coaxiale à l'axe de rotation (13) du rotor (8') et est couplée de manière non rotative à un arbre d'entraînement (14), qui est en liaison active permanente avec le rotor (8') et qui est disposé dans la direction axiale par rapport à l'axe de rotation du rotor (8') en chevauchement avec la tête d'enroulement (11) du stator (8) et/ou avec la tête d'enroulement du rotor (8'), de sorte que la tête d'enroulement (11) du stator (8) et/ou la tête d'enroulement du rotor (8') entourent la roue dentée conique (21) dans la direction circonférentielle du stator (8) et/ou du rotor (8').
